# EUROPEAN PATENT APPLICATION

(11) **EP 2 557 497 A1**
(43) Date of publication of application: **13.02.2013**
(21) Application number: 11188007.6
(22) Date of filing: 07.11.2011
(51) Int. Cl.: G06F 9/445

(54) **Method for improving booting of a computing device**

(30) Priority: 08.08.2011 EP 11006489
(71) Applicant: Advanced Digital Broadcast S.A., 1292 Chambesy (CH)
(72) Inventor: Glod, Andrzej, 65-012 Zielona Gora (PL)
(74) Representative: Di Bernardo, Antonio

(57) **Abstract**

It is disclosed a method for a non-volatile digital data storage optimization for a computing device. Computer executable instructions are obtained and stored in a non-volatile memory of the computing device according to a final physical data layout and are requested during boot-up of the computing device. According to the method, a source physical data layout is first generated which comprises the same computer executable instructions of the final physical data layout being different from the source physical data layout. A source mapping table maps the non-volatile digital storage device on memory blocks of the source physical data layout to memory blocks of the final physical data layout. The source mapping table is then set to a default correspondence between memory blocks of the source physical data layout and memory blocks of the final physical data layout. A bootup test of the computing device with the source physical data layout is then executed, said boot-up comprising copying of said file from the non-volatile memory to a volatile memory in order to execute said computer executable instructions. During the bootup test a sequence of access of the computing device to the memory blocks of the non-volatile memory is recorded. The final physical data layout is obtained from the source physical data layout by organizing data of the source physical data layout according to the sequence recorded during the bootup test. A final mapping table is then generated by updating the source mapping table so that a final mapping table maps memory blocks of the source physical data layout to memory blocks of the final physical data layout. The mapping table is stored in a non-volatile memory unit being accessible during boot-up of the computing device so that computer executable instructions of the final physical data layout can be executed during bootup.

## Description

### TECHNICAL FIELD

The present invention relates to the field of computing devices, and in particular to the field of video appliances, as an example set-top-boxes.

The invention particularly relates to methods for the boot up of such computing devices, in particular to methods according to the preamble of claim 1.

### BACKGROUND ART

When a computing device is switched on, it takes some time for completing boot up, i.e. for the operating system to get from memory and execute all drivers, middleware and applications that are necessary for the video appliance operation.

Boot up time is therefore strictly related to the complexity and functions of the computing device. The more the functions a computing device is requested to do, the more the drivers and applications that must be executed during boot up.

A particular type of computing devices which is particularly sensitive to boot-up time, is video appliances.

Nowadays, video appliances like set-top-boxes and video appliances in general, are known which are able to output video streams based on data received via different sources: cable, satellite, Internet or local Networks (IPTV), USB ports, and so on. Such devices therefore require a plurality of drivers to allow the CPU (Central Processor Unit) to communicate with the hardware.

As the number of sources increases, also the size and number of the applications necessary to manage data and video streams are increasing.

As a result, time for completing boot up is getting longer and annoying for the user.

In order to avoid this problem, video appliances are normally put in standby mode instead of being completely switched off once the user ends operation of the video appliance. In this way restoring from standby mode does not request too much time.

Nevertheless, video appliances do consume energy during the standby mode, therefore the solution provided to avoid the user to be annoyed by this long booting time has the drawback of consuming energy.

In order to improve operation of computing devices, it is known to optimize data storage on an hard disk drive. US Patent US 6,202,121, discloses a system and method for improved program launch time wherein an installation disk includes a load sequence list which indicates the order in which various portions of the files are read during launch. During the installation process, the installation program reads the data from the load sequence list and writes the file portions so they are stored in the order prescribed by the load sequence list in contiguous clusters on the hard disk drive. The computer can then read launch-related data from the disk in the proper order from contiguous disk clusters, which minimizes or eliminates wasted time that would result from disk accesses if the disk heads had to move between non-contiguous clusters in order to read the launch-related data.

While useful, the solution provided by US 6,202,121 applies to installation of application programs and is therefore file system dependent, i.e. the installation program reads from the sequence list the order files shall be installed, but it is the file system that will organize and store the program files in the hard drive. Specific solutions shall be used to take care of the specific operating system and file system running on the computing device. Additionally, program launch-time is not fully optimized since according to US 6,202,121, files are stored in contiguous clusters, but launching of the program could require only portions of the files to be executed. Time is therefore lost to seek the next file to be loaded while program is launched.

In order to improve boot-up of a computing device, in particular a computer, solutions are known which are mostly based on loading an hibernation image created and saved in the hard disk drive at the preceding boot process. These solutions do not work for the first bootup of the computing device, and in general do not provide for data storage optimization in the computing device, therefore these solutions suffer from bootup delay due to data optimization.

There is therefore the need for a computing device, and in particular for a video appliance, which provides for good performances and functionalities without requiring long booting time.

In particular, there's the need for a method for data storage optimization which improves boot-up of a computing device.

### OBJECTS AND SUMMERY OF INVENTION

It is therefore an object of the present invention to present a computing device, and in particular a video appliance, which provides for good performances without requiring long booting time.

This and further objects of the present invention are achieved by means of a method for data storage optimization in a computing device comprising the features of the annexed claims, which are intended to form integral part of the present description.

In particular, these objects are achieved via a method for non-volatile digital data storage optimization for a computing device, comprising the steps of obtaining computer executable instructions that are to be requested during boot-up of the computing device and are stored according to a final physical data layout in a non-volatile digital storage device. According to the method, the final physical data layout is generated according to the following steps:
- generating a source physical data layout comprising the same computer executable instructions of the final physical data layout being different from the source physical data layout;
- generating a source mapping table to be used for execution of the computer executable instructions, the source mapping table mapping the non-volatile digital storage device memory blocks of the source physical data layout to memory blocks of the final physical data layout,
- setting the source mapping table to a default correspondence between memory blocks of the source physical data layout and memory blocks of the final physical data layout,
- executing a bootup test of the computing device with the source physical data layout,
- during the bootup test recording a sequence of access of the computing device to the memory blocks of the non-volatile digital storage device,
- generating the final physical data layout by organizing data of the source physical data layout according to the sequence recorded during the bootup test

In order to execute the computer executable instructions organized according to the final physical data layout, a final mapping table is generated by updating the source mapping table so that a final mapping table maps memory blocks of the source physical data layout to memory blocks of the final physical data layout, and is stored in a non-volatile memory unit being accessible during boot-up of the computing device.

In this way, the computing device is then provided with a final file system which allows a faster boot up since during boot up data are read sequentially from the file system.

The provision of a mapping table, in particular, allows data storage optimization without requiring the software designer to create a dedicated operating system.

The inventors have found that this data storage optimization method does apply very well to video appliances, wherein bootup can be very annoying for the viewer.

Inventors have found that the final file system that has to be stored in the video appliance during manufacturing time can be generated by first generating a test file system comprising a mapping table mapping memory blocks of the test file system on memory blocks of the final file system. The mapping table is first set to a one to one correspondence between memory blocks of the test file system and memory blocks of the final file system. After that, the video appliance is switched on and a bootup test of the video appliance with the test file system is executed.

During bootup test the sequence of access to the memory blocks of the test file system is recorded.

The final file system is then generated by updating the mapping table so that it maps memory blocks of the test file system on memory blocks of the final file system, and by organizing data of the test file system according to the sequence recorded during the bootup test.

In this way, the video appliance that is finally manufactured is provided with a final file system which allows a faster boot up since during boot up data are read sequentially from the file system.

The provision of a mapping table, in particular, allows manufacturing of a fast boot up video appliance without requiring the software designer to create a dedicated operating system.

The invention is also directed to a computing device and in particular a video appliance, comprising computer readable instructions generated according to the method above described.

In one aspect, the invention is directed to a computer program comprising program code means for performing all the steps of the method according to the teachings of the following description and claims, when said program is run on a computer.

In another aspect, the invention is directed to a computer readable medium storing computer-executable instructions performing all the steps of the computer-implemented method according to the teachings of the following description and claims, when executed on a computer.

### BRIEF DESCRIPTION OF THE DRAWINGS

Further features and advantages of the present invention will become apparent in the detailed description of preferred non-exclusive embodiments of a coding method and of a decoding method, and of relative systems according to the invention, which are described as non-limiting examples with the help of the annexed drawings, wherein:
- Figure 1, schematically represents a video appliance according to the present invention;
- Figure 2 schematically represents a non-volatile storage device of the video appliance of figure 1,
- Figures 3A and 3B represents a mapping table of the video appliance of figure 1,
- Figure 4 is a flow diagram of a method for manufacturing a video appliance according to an embodiment of the present invention,

These drawings illustrate different aspects and embodiments of the present invention and, where appropriate, like structures, components, materials and/ or elements in different figures are indicated by the same reference numbers.

### DETAILED DESCRIPTION OF THE INVENTION

While the invention is susceptible of various modifications and alternative constructions, certain illustrated embodiments thereof have been shown in the drawings and will be described below in detail. It should be understood, however, that there is no intention to limit the invention to the specific form disclosed, but, on the contrary, the invention is to cover all modifications, alternative constructions, and equivalents falling within the spirit and scope of the invention as defined in the claims.

In the following description and in the figures, like elements are identified with like reference numerals. The use of "e.g.," "etc.," and "or" indicates non-exclusive alternatives without limitation unless otherwise noted. The use of "including" means "including, but not limited to," unless otherwise noted.

The use of "memory block" means the smallest amount of disk or memory space that can be allocated to hold a file within a given file system. A memory block can comprise a fixed amount of sectors, a sector being the smallest individual unit that the data storage device is capable of physically reading or writing, generally 512 bytes or multiples.

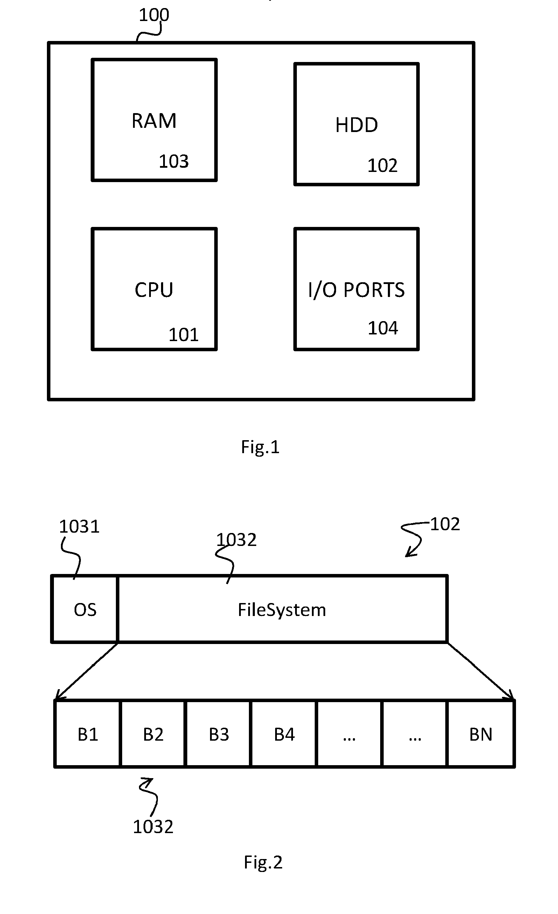

Figure 1 schematically illustrates a video appliance 100, in particular a set top box, comprising a control unit 101 controlling operation of the video appliance. In the preferred embodiment, control unit 101 is system-on-a-chip (SoC), i.e. an integrated circuit (chip) comprising at least a microcontroller and one or more DSPs (Digital Signal Processors).

Video appliance 100 further comprises a storage device 102 and a main memory 103, preferably composed of random access memory chips, or RAM. In the preferred embodiment, storage device 102 is an hard disk drive (HDD), yet in another embodiment the storage device can be a solid state device (SSD), e.g. a device comprising a plurality of NAND memories, or any other type of device suitable to store data.

In the embodiment of figure 1, a block 104 represents a group of input/output ports through which the video appliance receives coded video streams and outputs different video streams. As an example, in one embodiment video appliance 100 is a set-top-box to be used in connection with a TV set; I/O ports 104 therefore comprise a receiver for receiving video streams and data via an antenna and an output video port (e.g. an HDMI port or a SCART port) to output a video stream intended for the TV set. More in general I/O port can comprise any port for communication with an external device, such as a USB port, an Ethernet port or an Infrared receiver.

When the electric power is switched on, video appliance 100 boots up, i.e. it starts a process wherein a set of operations is executed until it is ready for use.

During boot up, control unit 101 executes a machine code software (called booter), preferably stored in the control unit firmware. Booter seeks an operating system (OS) in the storage device 102 and copies it into main memory 103, so that it can be directly accessed by the control unit 101. Copy of data from storage device 102 to main memory 103 is made sequentially, so that after copying is completed, data in memory blocks of main memory 103 are organized according to the same order of memory blocks in storage device 102.

Operating system and other data necessary during bootup constitute a set of computer executable instructions that are stored in the storage device 102 according to a given physical data layout that is shown, by way of non-limiting example, in figure 2.

In this example, storage device 102 comprises a first group of memory blocks (1031) storing data corresponding to the kernel of the OS, and a second group of memory blocks (1032) storing a file system.

In the embodiment of figure 2, only memory blocks storing data of the file system are exploded and indicated as B1, B2...BN.

As it is well known, file system is a hierarchy of directories that is used to organize files on the video appliance. The exact content of the file system varies according to the video appliance, but, in general terms, it includes the files that are necessary for booting the system, like drivers, middleware and applications.

During boot up, control unit 101 executes the OS, therefore from time to time drivers and applications stored in the group of memory blocks 1032 will be accessed and the instructions stored therein copied in main memory 103 and executed.

The order of access to memory blocks of the file system depends both on the OS structure and on the OS configuration made during design of the video appliance.

As a result, in prior art video appliances, during booting the OS access different memory blocks in a way that cannot be foreseen by a software designer; e.g. the OS can first request a driver stored in block B1, and then a second driver stored in block B4, and then an application stored in blocks B2 and B3.

Retrieval of data from a given block requires time for seeking the block in the storage device.

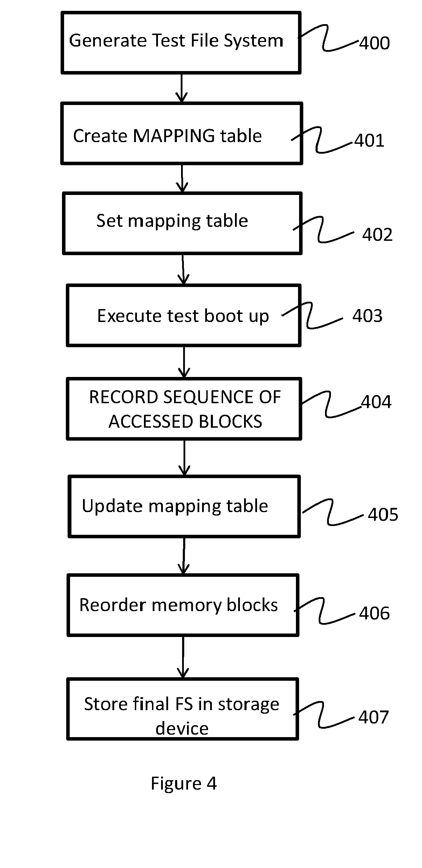

In order to reduce booting time, the inventors have thought to implement the manufacturing method described here below with reference to figure 4.

First of all (step 400) during design of the video appliance the OS is configured and a test file system, in particular a root file system, is created by software di per se known on the market, like SquashFS ®, a file system for Linux. In this way a set of computer executable instructions requested during bootup of the video appliance is obtained.

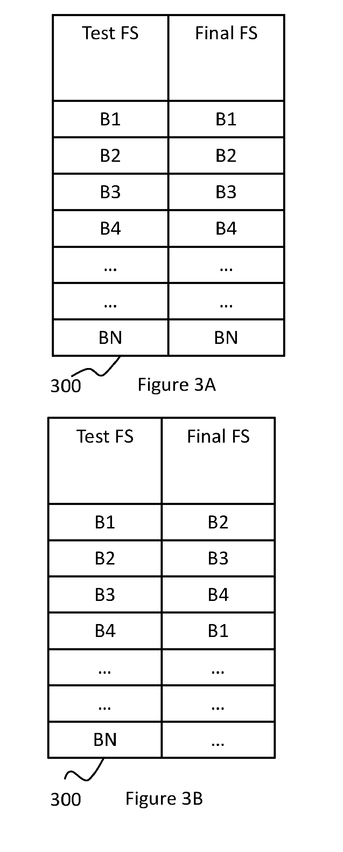

In this phase, a system driver (in the following storage device driver) that communicates with the storage device 102 is generated (step 401). Storage device driver is necessary for executing the computer executable instructions stored in the storage device and comprises a mapping table 300 (shown in figure 3A) which maps memory blocks allocated to the test file system with memory blocks that will be allocated to a final file system that will be described here below.

In one embodiment, generation of the storage device driver is obtained by modifying an existing driver provided by the hardware manufacturer.

In this design phase of the video appliance, the mapping table is set (step 402) so as to have a one to one correspondence between blocks allocated to the test file system and memory blocks allocated to the new file system, as shown in figure 3A.

The OS and drivers so generated will therefore comprise computer executable instructions that are requested during boot-up of the computing device. These computer executable instructions are organized into files that are requested during boot-up of the video appliance. These instructions are stored in a non-volatile digital storage device which is operably connected to the computing device such that data may be retrieved by the computing device from the non-volatile digital storage device. In the above embodiment, computer executable instructions are therefore stored on the non-volatile digital storage device 102 according to a source physical data layout. While in the following description the digital storage device 102 is included in the video appliance, it is clear to a person skilled in the art that such device can be external to the video appliance, or that files requested during boot-up can be stored in an external device accessible from the video appliance.

Once the final configuration of the video appliance is done, the latter undergoes (step 403) to a boot up test, whereby the video appliance is switched on and the OS is started simulating a boot up stage.

As already explained above, during boot-up, OS is copied from storage device 102 to the volatile main memory 103.

A computer software monitors (step 404) access to storage device 102 during this boot up test and records the access sequence to the memory blocks allocated to the test file system.

The final file system is then generated (steps 405 and 406).

Generation of the new file system requires two actions:
- Reordering of data of the test file system,
- Updating mapping table 300.

In detail, the mapping table 300 is updated so as to map memory blocks of the test file system on memory blocks of the final file system, i.e. the memory blocks reorganized according to the access sequence recorded during boot up test.

The storage device driver with the updated memory table, and the other files of the first file system are then mixed up so as to generate the final file system wherein they are organized according to a final physical data layout comprising the updated mapping table and the same computer executable instructions of the source physical data layout. In particular, data of the new file system required during bootup of the video appliance are organized in memory blocks that are expected to be read sequentially by the OS during boot up.

As an example, suppose at step 404 it has been recorded that the OS requested first data of the test file system stored in block B4, then data stored in block B1, then data stored in block B2 and finally data stored in block B3. The new file system will therefore comprise a first memory block comprising data that where stored in memory block B4 of the test file system, then data that were stored in memory block B1 of the test file system, then data of memory block B2 of the test file system and finally data of memory block B3 of the test file system.

In other words, the final file system comprises the same data of the first file system exception made for the updated storage device driver, nevertheless, data of the old file system are reorganized so that they will be read in sequence, therefore reducing booting time.

Finally, at step 407 the video appliance is manufactured and the operating system with the final file system is stored in the storage device of the video appliance.

It is clear from the above description that a video appliance obtained by a process as the one above described fulfils the objectives of the present application.

It is also clear that a person skilled in the art, appreciating the invention as above described and as resulting from the annexed claims, could adopt a plurality of variants to the methods and products above described with reference to particular exemplificative embodiments of the present invention.

As an example, in one embodiment the operating system can be loaded on a solid state driver and therefore directly initialized without copying from a storage device to a RAM memory.

While in the above embodiment the mapping table is stored in the same storage device storing the other computer executable instructions requested during bootup of the video appliance, it is clear that this mapping table can be stored in another non-volatile storage device, and the storage device driver above described can be modified to access a mapping table stored in a different device.

Although the above embodiments have been disclosed with reference to a video appliance and to manufacturing of a video appliance, it is clear that the same teaching of data storing optimization can be applied to any computing device in order to speed-up booting of the same.

It can be easily recognised, by one skilled in the art, that the aforementioned method for data storage optimization, or portions of the method, may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented above.

## Claims

1. Method for a non-volatile digital data storage optimization for a computing device, comprising the steps of
○ obtaining computer executable instructions to be requested during boot-up of the computing device,
○ storing the computer executable instructions on a non-volatile digital
storage device in order to obtain a final physical data layout,
the method being **characterized in that** the final physical data layout is generated according to the following steps:
• generating a source physical data layout comprising the same computer executable instructions of the final physical data layout being different from the source physical data layout;
• generating a source mapping table to be used for execution of the computer executable instructions, the source mapping table mapping the non-volatile digital storage device memory blocks of the source physical data layout to memory blocks of the final physical data layout,
• setting the source mapping table to a default correspondence between memory blocks of the source physical data layout and memory blocks of the final physical data layout,
• executing a bootup test of the computing device with the source physical data layout,
• during the bootup test recording a sequence of access of the computing device to the memory blocks of the non-volatile digital storage device,
• generating the final physical data layout by organizing data of the source physical data layout according to the sequence recorded during the bootup test;
and **in that** a final mapping table is generated by updating the source mapping table so that a final mapping table maps memory blocks of the source physical data layout to memory blocks of the final physical data layout, and is stored in a non-volatile memory unit being accessible during boot-up of the computing device.

2. Method according to claim 1, wherein said source physical data layout is generated during a design phase of the computing device and wherein said final physical data layout is stored in the computing device during manufacturing of the computing device.

3. Method according to claim 2, wherein said final physical data layout is generated during said design phase.

4. A computer program comprising program code means for performing all the steps of the method as claimed in any of claims 1 to 3 when said program is run on a computer.

5. A computer readable medium storing computer-executable instructions performing all the steps of the computer-implemented method according to any of claims 1 to 3 when executed on a computer.

6. Computing device comprising
○ a storage device (102) storing computer executable instructions to be requested during boot-up of the computing device and being organized according to a final data layout,
○ a control unit (101) suitable for executing said computer executable instructions,
said computing device being **characterized in that** said computer executable instructions are adapted to be executed using a mapping table mapping memory blocks of the final physical data layout to memory blocks of a source physical data layout, said source physical data layout being different from said final data layout and comprising the same computer executable instructions of the final physical data layout.

7. Computing device according to claim 6, wherein said computer executable instructions comprise a storage device driver requesting data of a mapping table being stored in a second non-volatile storage device.

8. Computing device according to claim 6 or 7, wherein said device is a video appliance.
